# EUROPEAN PATENT SPECIFICATION

(11) **EP 4 363 940 B1**
(45) Date of publication and mention of the grant of the patent: **11.06.2025**
(21) Application number: 21745693.8
(22) Date of filing: 01.07.2021
(51) Int. Cl.: B60R 25/24, G08C 17/02, H04W 12/08, G05D 1/00

(54) **AN ON-BOARD CONTROL UNIT, AN OFF-BOARD CONTROL STATION AND METHODS THEREIN FOR ENABLING A SAFE OPERATION OF A VEHICLE**
BORDEIGENE STEUEREINHEIT, OFF-BOARD-STEUERSTATION UND VERFAHREN DARIN ZUR ERMÖGLICHUNG EINES SICHEREN BETRIEBS EINES FAHRZEUGS
UNITÉ DE COMMANDE EMBARQUÉE, STATION DE COMMANDE HORS BORD ET PROCÉDÉS ASSOCIÉS POUR PERMETTRE LE FONCTIONNEMENT SÛR D'UN VÉHICULE

(43) Date of publication of application: 08.05.2024
(73) Proprietor: Volvo Construction Equipment AB, 631 85 Eskilstuna (SE)
(72) Inventor: GUSTAVSSON, Viktor, 722 24 Västerås (SE); FRIES, Mikael, 632 33 Eskilstuna (SE)
(74) Representative: Zacco Sweden AB
(86) International application number: PCT/EP2021/068273
(87) International publication number: WO 2023/274550

(56) References cited:
- EP-A1- 2 778 598
- CN-A- 109 285 252

## Description

### TECHNICAL FIELD

Embodiments herein relate in general to safe remote operation of a vehicle. In particular, embodiments herein relate to an on-board control unit of a vehicle and a method therein for enabling a safe operation of the vehicle. Also, the embodiments herein also relate to an off-board control station for enabling a safe operation of a vehicle. Further, the embodiments herein also relate to a computer program product and carrier.

### BACKGROUND

Remotely operated equipment, such as, for example, remote controlled machines with camera/video feedback to an operator, are often operated with the operator located far away from the location of the remotely operated equipment. Thus, it may not be feasible or practical for the operator of a remote controlled machine to visually inspect the remote controlled machine while starting up the machine. In the event that there are several remote controlled machines operating within the same remote control system, that is, the remote control system is arranged to control multiple different remote controlled machines, it may be critical to ensure that the remote controlled machine which an operator is under the impression that he is currently controlling is the remote controlled machine actually being controlled.

Although this problem may become moot or trivial once the remote controlled machine is in remote operation, an accident may still occur during start-up in case the operator is trying to control one remote controlled machine while actually controlling another remote controlled machine. In such cases, an operator may, for example, aggressively move his controls to obtain a reaction from a remote controlled vehicle since the operator is perceiving that nothing is happening via his remote display screen. This may cause damage on the remote controlled machine and people if another remote controlled machine is receiving said control commands and is thus controlled accordingly.

Hence, there is a need to improve the safety of remote operations of a vehicle, in particular during a start-up sequence of said remote control.

EP2778598A1 describes an apparatus for use on unmanned vehicles, wherein a plurality of activation codes are generated in order to activate a payload.

CN109285252A describes a vehicle lock control method and device using activation codes

### SUMMARY

The invention is set forth in the independent claims 1, 5, 9, 12 and in the dependent claims 2 to 4, 6 to 8, 10, 11 and 13 to 17.

It is an object of embodiments herein to improve the safety of remote operations of a vehicle.

According to a first aspect of embodiments herein, the object is achieved by a method performed by an on-board control unit of a vehicle for enabling a safe operation of the vehicle. The method comprise receiving, via a wireless communication interface, a second activation code from an off-board control station capable of remotely operating the vehicle. The method also comprise activating the vehicle for operation in case the received second activation code correspond to a first activation code comprised in the on-board control unit.

By having an on-board control unit checking the received activation code against an on-board activation code, it may be ensured that the video feedback used to operate the vehicle is indeed transmitted from the vehicle that a remote control interface is sending its control signals to. Hence, the safety of remote operations of the vehicle is improved.

According to some embodiments, the method may comprise receiving, from the off-board control station, information indicating that the vehicle is to be activated for operation. This enables the on-board control to receive an indication from the off-board control station that an operator is requesting the vehicle to be activated. In this case, the method may also comprise transmitting the first activation code to the off-board control station in response to the received information. Here, according to some embodiments, transmitting of the first activation code may comprise embedding a visual representation of the first activation code in camera images obtained from one or more on-board cameras, and transmitting the camera images comprising the visual representation of the first activation code to the off-board control station. This allows the first activation code to be unambiguously linked to the camera images from the vehicle in a non-separable manner; thus, providing a visual assurance to an operator viewing the camera images of the activation code of vehicle from which the camera images are originating.

In some embodiments, the method may also comprise transmitting, to the off-board control station, information indicating that the vehicle has been activated for operation. This provides an assurance to the operator that the vehicle has actually been activated. Also, in some embodiments, in case the vehicle is an autonomous vehicle, the method may comprise activating the autonomous vehicle to begin performing one or more autonomous operations. Alternatively, in case the vehicle is a remote-controlled vehicle, the method may comprise activating the remote-controlled vehicle to be remotely operated from the off-board control station.

According to a second aspect of embodiments herein, the object is achieved by an on-board control unit of a vehicle for enabling a safe operation of the vehicle. The on-board control unit is configured to receive, via a wireless communication interface, a second activation code from an off-board control station capable of remotely operating the vehicle. The on-board control unit is also configured to activate the vehicle for operation in case the received second activation code correspond to a first activation code comprised in the on-board control unit.

According to some embodiments, the on-board control unit may be configured to receive, from the off-board control station, information indicating that the vehicle is to be activated for operation, and transmit the first activation code to the off-board control station in response to the received information. Here, according to some embodiments, the on-board control unit may be configured to embed a visual representation of the first activation code in camera images obtained from one or more on-board cameras, and transmit the camera images comprising the visual representation of the first activation code to the off-board control station.

In some embodiments, the on-board control unit may be configured to transmit, to the off-board control station, information indicating that the vehicle has been activated for operation. Also, in some embodiments, in case the vehicle is an autonomous vehicle, the on-board control unit may be configured to activate the autonomous vehicle to begin performing one or more autonomous operations. Alternatively, in case the vehicle is a remote-controlled vehicle, the on-board control unit may be configured to activate the remote-controlled vehicle to be remotely operated from the off-board remote control station.

According to a third aspect of the embodiments herein, the object is achieved by a method performed by an off-board control station for enabling a safe operation of a vehicle. The method comprise receiving, via a wireless communication interface, a first activation code from an on-board control unit. The method also comprise indicating the received first activation code to an operator of the off-board control station. Further, the method comprise receiving manual input indicating a second activation code from the operator of the off-board control station. Also, the method comprise transmitting, via the wireless communication interface, the received second activation code to the on-board control unit of the vehicle.

According to some embodiments, the method may comprise receiving, from the operator of the off-board control station, manual input indicating that the vehicle is to be activated for operation. In this case, according to some embodiments, the method may comprise transmitting, to the on-board control unit, information indicating that the vehicle is to be activated for operation. Also, in some embodiments, the method may also comprise receiving, via the wireless communication interface, information from the on-board control unit indicating that the vehicle has been activated for operation. In this case, according to some embodiments, the receiving of the information may comprise receiving camera images originating from one or more on-board cameras of the vehicle comprising an embedded visual representation of the first activation code. Further, the indicating of the received first activation code may comprise displaying the camera images comprising an embedded visual representation of the first activation code to the operator of the off-board control station.

According to a fourth aspect of the embodiments herein, the object is achieved by an off-board control station for enabling a safe operation of a vehicle. The off-board control station being configured to receive, via a wireless communication interface, a first activation code from an on-board control unit. The off-board control station is also configured to indicate the received first activation code to an operator of the off-board control station. Further, the off-board control station is configured to receive manual input indicating a second activation code from the operator of the off-board control station. Also, the off-board control station is configured to transmit, via the wireless communication interface, the received second activation code to the on-board control unit of the vehicle.

According to some embodiments, the off-board control station may also be configured to receive, from the operator of the off-board control station, manual input indicating that the vehicle is to be activated for operation. Here, in some embodiments, the off-board control station may also be configured to transmit, to the on-board control unit, information indicating that the vehicle is to be activated for operation. In some embodiments, the off-board control station may be configured to receive, via the wireless communication interface, information from the on-board control unit indicating that the vehicle has been activated for operation. According to some embodiments, the off-board control station may be configured to receive the first activation code by receiving camera images originating from one or more on-board cameras of the vehicle comprising an embedded visual representation of the first activation code. In this case, according to some embodiments, the off-board control station may be configured to indicate the first activation code by displaying the camera images comprising an embedded visual representation of the first activation code to the operator of the off-board control station.

According to a fifth aspect of the embodiments herein, the object is achieved by a computer program comprising instructions which, when executed in a processing circuitry, cause the processing circuitry to carry out the method described above. According to a sixth aspect of the embodiments herein, the object is achieved by a carrier containing the computer program described above, wherein the carrier is one of an electronic signal, optical signal, radio signal, or computer-readable storage medium.

### BRIEF DESCRIPTION OF THE DRAWINGS

Features and advantages of the embodiments will become readily apparent to those skilled in the art by the following detailed description of exemplary embodiments thereof with reference to the accompanying drawings, wherein:
- Fig. 1: is a schematic illustration of a vehicle and a system for remote operation of the vehicle according to some embodiments,
- Fig. 2: is a flowchart illustrating embodiments of a method in an on-board control unit,
- Fig. 3: is a flowchart illustrating embodiments of a method in an off-board control station,
- Fig. 4: is a signalling diagram illustrating embodiments of an on-board control unit and an off-board control station,
- Fig. 5: is a schematic view of a display of camera images according to some embodiments,
- Fig. 6: is a block diagram depicting embodiments of an on-board control unit,
- Fig. 7: is a block diagram depicting embodiments of an off-board control station.

### DETAILED DESCRIPTION

The invention will now be described more fully hereinafter with reference to the accompanying drawings, in which certain aspects of the invention are shown.

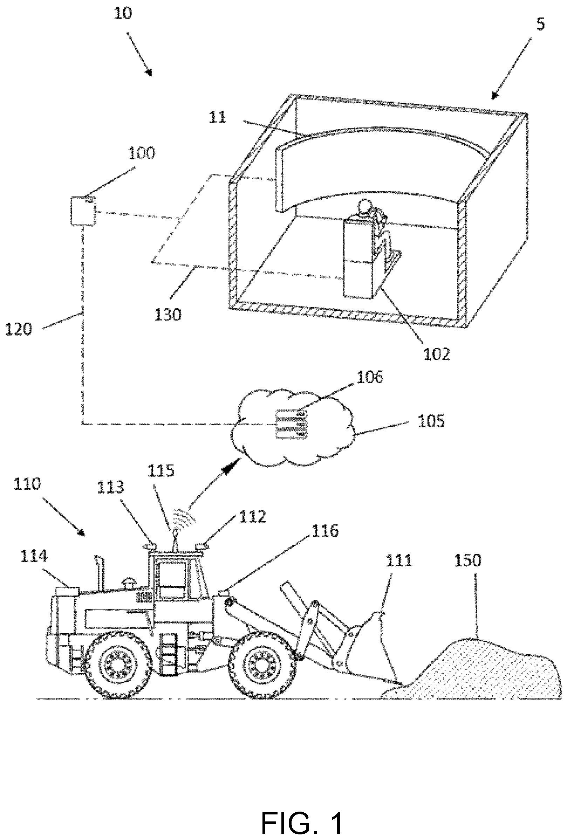

**Fig. 1** shows an example of a system 10 for remote operation of a vehicle 110. The vehicle 110 may, for, example, be a working machine 110, such as, an excavator, fork lift, loader, hauler, etc., but may be any remote operated vehicle. In this example, the vehicle 110 may comprise a working tool 111. The working tool 111 may be any of a large variety of different attachable working tools, such as, e.g. loader buckets, buckets of different sizes, fork lifts, etc. The working tool 111 may be arranged to be connected or attached to the vehicle 110 and operated therefrom. In the example illustrated in Fig. 1, the vehicle 110 is a loader comprising a tool 111 in the form of a bucket to, e.g. move a pile of loose material 150.

As part of the system 10, the vehicle 110 also comprise an on-board control unit 114, at least one camera 112, 113, and at least one antenna 115. The on-board controller 114 may be connected to and arranged to communicate with the at least one camera 112, 113, e.g. wirelessly or by wire. Via the antenna 115, the on-board control unit 114 may receive signals remotely from an off-board control station 100. Thus, the on-board control unit 114 is adapted to be arranged on the vehicle 110. The on-board control unit 114 is also adapted to receive signals from the off-board control station 100 remotely controlling the operation of the vehicle 110. The on-board control unit 114 is arranged to obtain camera images from at least one camera 112, 113 on the vehicle 110.

Further, also as part of the system 10, the off-board control station 100 may be connected via a communication link 120 to a communications server 106. The communications server 106 may be part of a wireless communications network 105 arranged for wireless communication over an air interface with the antenna 115 and on-board control unit 114. The air interface may, for example, be provided by a telecommunications network, such as, e.g. a 3g/4g/LTE/5g/6g network or other future networks, and/or by a local wireless network, such as, e.g. WiFi, etc. This allows the off-board control station 100 to communicate with the on-board control unit 114 located on the vehicle 110. The off-board control station 100 may also be arranged in, or connected to, a remote control interface 5. The remote control interface 5 may comprise a manual work station 102 and at least one display 11. The off-board control station 100 may be arranged to communicate with the manual work station 102 and the at least one display 11 over one or more communication links 130.

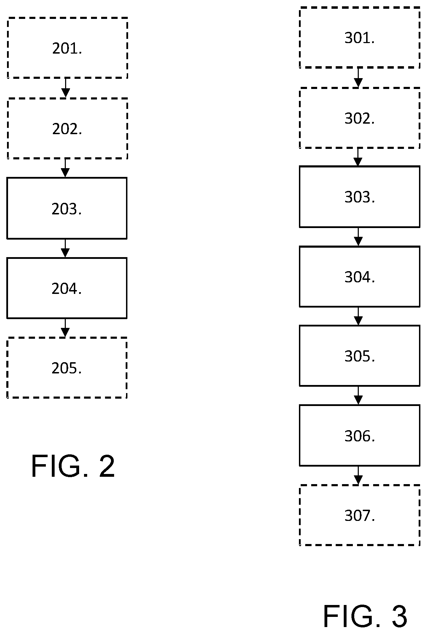

Thus, even though the embodiments herein for enabling a safe operation of a vehicle 110 are described with respect to the example of working machines according to Fig. 1, the embodiments herein should not be considered restricted to this particular type of vehicle but may also be used in other types of vehicles, such as, e.g. a conventional passenger cars, or heavy-duty vehicles, such as., e.g. semi-trailer vehicles or trucks for cargo transport. The on-board control station 110 and the off-board control station 100 are described below in more detail in reference to Figs. 2-6.

As part of the developing of the embodiments described herein, it has been realized that, in the event that there are several remote controlled vehicles operating within the same remote control system, it is highly important from safety perspective that the camera or video feed presented to an operator of remote control station is originating from the same vehicle that is currently being remotely operated. Although this problem may become moot or trivial once the remote controlled vehicle is in remote operation, an accident may still occur during start-up if the camera or video feed is not corresponding to the vehicle that is being remotely operated, i.e. the camera or video feed is coming from the another vehicle. In such cases, an operator may, for example, aggressively move his controls in order to see a reaction from the remote controlled vehicle in the camera or video feed, since the operator is not witnessing any remote operations being carried out via the camera or video feed in response to the operator's control input. This may cause damages to the remote controlled vehicle (or property and/or people in its vicinity) that is actually receiving the control input, and is thus moving accordingly. This issues are addressed in the embodiments of the on-board control unit 114 and off-board control station 100 described below with reference to Figs. 2-6.

One particular use case of the embodiments herein is for tele-operated vehicles, such as, e.g. trucks, excavators, wheel loaders and haulers, etc. Such vehicles may be operated in within a system or fleet with a large number of vehicles and several different remote control interfaces that may be located at several different locations. For various reasons, such as, e.g. partial automation, down-time, etc., the number of remote control interfaces does not necessarily correspond to the number of vehicles. Hence, it is a requirement that the vehicle needs to be able to switch remote control station, and likewise, the remote control stations need to be able to switch between different vehicles. Therefore, it is important that the operator is forced to verify that the operator actually controls the vehicle corresponding to their current video feedback, before they may begin operating or motioning the vehicle. Otherwise, there could be a high level of risk for accidents.

Examples of embodiments of a method performed by an on-board control unit 114 of a vehicle 110 for enabling a safe operation of the vehicle 110, will now be described with reference to the flowchart depicted in **Fig. 2.** Fig. 2 is an illustrated example of actions, steps or operations which may be taken by the on-board control unit 114 on-board the vehicle 110 in the system 10 shown in Fig. 1. The method may comprise the following actions, steps or operations.

**Action 201.** Optionally, the on-board control unit 114 may receive, from the off-board control station 100, information indicating that the vehicle 110 is to be activated for operation. This means that the on-board control unit 114 may receive a start-up command to initiate remote operations of the vehicle 110 from an operator working at a remote control interface 5 of an off-board control station 100. This may, for example, comprise beginning to transmit camera images, i.e. a camera or video feed, from one or more on-board cameras 112, 113 of the vehicle 110 to the off-board control station 100. The off-board control station 100 may then display the received camera images to the operator via the remote control interface 5 of the off-board control station 100.

**Action 202.** After the reception in Action 201, the on-board control unit 114 may transmit a first activation code 311 to the off-board control station 100 in response to the received information. This means that the on-board control unit 114 may send an individual code or activation key representing the vehicle 110, such as, e.g. a three-digit machine identity number or identity (ID), to the off-board control station 100. Here, in some embodiments, the on-board control unit 114 may first embed a visual representation of the first activation code 311 in camera images obtained from one or more on-board cameras 112, 113. This means that individual code representing the vehicle 110 is transformed from a digital representation into a visual representation, i.e. hardcoded into the camera images from the one or more on-board cameras 112, 113 of the vehicle 110. The on-board control unit 114 may then transmit the camera images comprising the visual representation of the first activation code 311 to the off-board control station 100. This means that the individual code representing the vehicle 110 is only transmitted in the form of image data to the off-board control station 100.

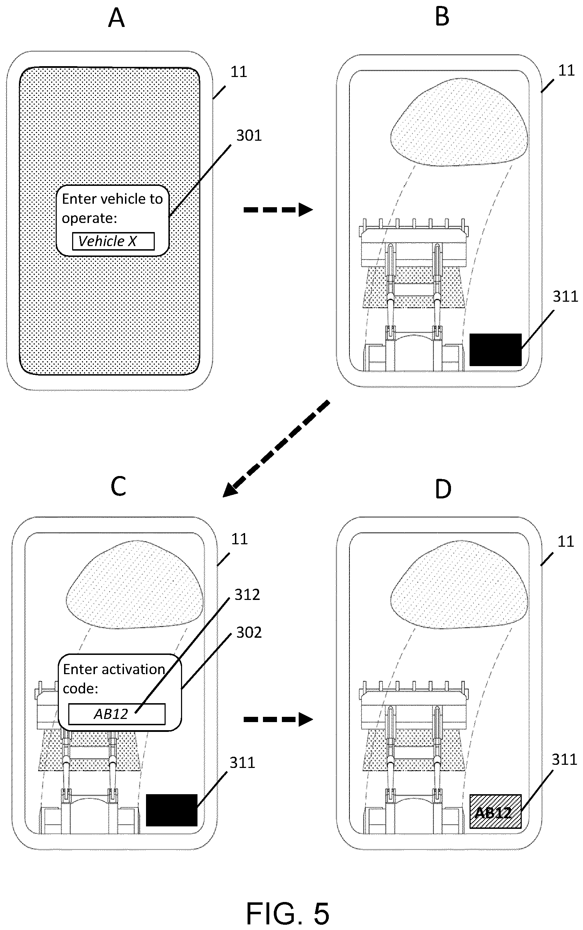

**Action 203.** The on-board control unit 114 receives, via a wireless communication interface 511, a second activation code 312 from an off-board control station 100 capable of remotely operating the vehicle 110. This means that an off-board control station 100 attempts to confirm to the on-board control unit 114 of the vehicle 110 that it is the vehicle 110 that is currently desired to be remotely controlled by an operator working at a remote control interface 5 of an off-board control station 100. The second activation code 312 may, for example, be digital information or a digital representation of manual inputs received from the operator working at the remote control interface 5 of the off-board control station 100. For example, the operator may manually input information corresponding to the visual representation of the individual code of the vehicle 110 embedded in the camera images that is being presented via the remote control interface 5 of the off-board control station 100. The wireless communications interface 511 is described in more detail with reference to Fig. 5.

**Action 204.** After receiving the second activation code 312 in Action 203, the on-board control unit 114 activates the vehicle 110 for operation in case the received second activation code correspond to a first activation code 311 comprised in the on-board control unit 114. This means that the on-board control unit 114 has confirmed that the received second activation code 312 is corresponding to, e.g. is identical to, the first activation code 311, e.g. by comparing the digital information representing the received second activation code with the digital information representing the first activation code 311 comprised in the on-board control unit 114. Therefore, the on-board control unit may safely start up the remote control of the vehicle 110 to enable the operator working at a remote control interface 5 of an off-board control station 100 to remotely operate the vehicle 110. However, it should also be noted that until the on-board control unit 114 has received the correct activation key, i.e. a second activation code 312 corresponding to the first activation code 311, the on-board control unit 114 will ensure that the vehicle 110 does not respond to any other commands sent from the remote control interface 5 of the off-board control station 100. This means that the vehicle 110 cannot be moved until the operator has confirmed that the camera images, i.e. image or video stream/feed, used for remote motion control of the vehicle 110 corresponds to the camera images being sent from the vehicle 110.

Optionally, the on-board control unit 114 may initiate different operations depending on which type of vehicle 110 it is arranged in. According to some embodiments and in case the vehicle 110 is an autonomous vehicle, the on-board control unit 114 may activate the autonomous vehicle to begin performing one or more autonomous operations. This means that the on-board control unit 114 may be used to remotely start up a vehicle for autonomous operation, by giving the operator of the fleet of different autonomous vehicles a safe way of visually inspecting the surroundings of each vehicle before starting autonomous operation. Alternatively, in some embodiments and in case the vehicle 110 is a remote-controlled vehicle, the on-board control unit 114 may activate the remote-controlled vehicle to be remotely operated from the off-board control station 100. This means that the on-board control unit 114 may be used to remotely start up a vehicle for remote controlled operation, by giving the operator of the fleet of different remote controlled vehicles a safe way of controlling the motion of each vehicle without any risk of remote controlling the wrong vehicle.

**Action 205.** After the activation of the vehicle 110 in Action 204, the on-board control unit 114 may transmit, to the off-board control station 100, information indicating that the vehicle 110 has been activated for operation. This means that the on-board control unit 114 may inform the off-board control station 100, and thus the operator working at a remote control interface 5 of an off-board control station 100, that the vehicle 100 is now being operated via the off-board control station 100. In some embodiments, this information may also be sent by changing the embedded visual representation of the individual vehicle code, i.e. the first activation code 311, in the camera images from the one or more on-board cameras 112, 113 of the vehicle 110. For example, a background field in the visual representation may change from red to green once the on-board control unit 114 has activated the vehicle 110 for operation.

Examples of embodiments of a method performed by an off-board control station 100 for enabling a safe operation of a vehicle 110, will now be described with reference to the flowchart depicted in **Fig. 3.** Fig. 3 is an illustrated example of actions, steps or operations which may be taken by the off-board control station 100 in the system 10 shown in Fig. 1. The method may comprise the following actions, steps or operations.

**Action 301.** Optionally, the off-board control station 100 may initially receive, from an operator of the off-board control station 100, manual input indicating that the vehicle 110 is to be activated for operation. This means, for example, that an operator working at a remote control interface 5 of an off-board control station 100 may indicate or inform the off-board control station 100 that the operator requests that the vehicle 110 is to be activated and start operating.

**Action 302.** After receiving the manual input in Action 301, the off-board control station 100 may transmit, to an on-board control unit 114, information indicating that the vehicle 110 is to be activated for operation. This means, for example, that the off-board control station 100 may, in response to the request from the operator, indicate or inform the on-board control unit 114 of the vehicle 110 that an operator requests that the vehicle 110 is to be activated and start operating.

**Action 303.** The off-board control station 100 receives, via a wireless communication interface 611, a first activation code 311 from an on-board control unit 114.This means, for example, that the on-board control unit 114 of the vehicle 110 may, e.g. in response to the information in Action 302, transmit an individual code or activation key representing the vehicle 110 to the off-board control station 100. The individual code or activation key, i.e. the first activation code 311, may, for example, be a three-digit machine identity number or identity (ID) of the vehicle 110. In some embodiments, the reception may be performed by the off-board control station 100 by receiving camera images originating from one or more on-board cameras 112, 113 of the vehicle 110 comprising an embedded visual representation of the first activation code 311. This means that as the off-board control station 100 receives camera images from the on-board cameras 112, 113 from the on-board control unit 114, the off-board control station 100 will then also receive the first activation code 311 because the first activation code will be comprised in the camera images in the form of image data embedded within the camera images. This is advantageous since it will ensure that the first activation code and the camera images are non-separable and fully integrated with each other. This will result in that the first activation code will uniquely assert that the camera images is specifically originating from the vehicle 110, i.e. tag the camera images emanating from the on-board cameras 112, 113 of the vehicle 110.

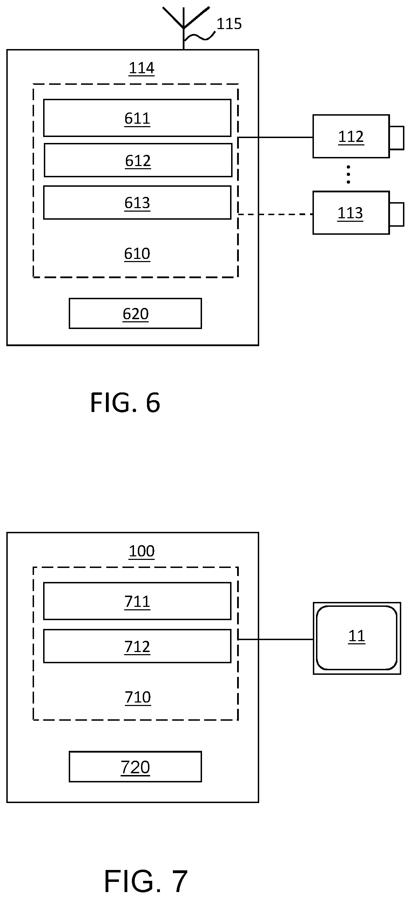

The wireless communications interface 611 is described in more detail with reference to Fig. 6.

**Action 304.** After receiving the first activation code 311 in Action 303, the off-board control station 100 indicates the received first activation code 311 to an operator of the off-board control station. This means, for example, that the off-board control station 100 may present the first activation code 311 to an operator working at a remote control interface 5 of an off-board control station 100, thus providing a confirmation to the operator that the operator that he is attempting to activate a specific vehicle, i.e. the vehicle 110. In some embodiments, the indication may be performed by the off-board control station 100 by displaying the camera images comprising an embedded visual representation of the first activation code 311 to the operator of the off-board control station 100. This means, for example, that the operator may be presented with an immediate and non-ambiguous confirmation that the camera images that is currently being viewed by the operator is actually originating from the on-board cameras 112, 113 of the vehicle 110. Here, it should be noted that the first activation code 311 may also be displayed to the operator via a separate display or indication device, and not necessarily together with the camera images on the same display.

**Action 305.** After the indication in Action 304, the off-board control station 100 receives manual input indicating a second activation code 312 from the operator of the off-board control station. This means, for example, that an operator working at a remote control interface 5 of an off-board control station 100 may provide the off-board control station 100 with a second activation code 312 corresponding to the first activation code 311 indicated in Action 304.

**Action 306.** After receiving the manual input in Action 305, the off-board control station 100 transmits, via the wireless communication interface 611, the received second activation code 312 to the on-board control unit 114 of the vehicle 110. This means, for example, that the off-board control station 100 may transmit the manual input, i.e. second activation code 312, from the operator working at a remote control interface 5 of an off-board control station 100 that the operator has inputted in response to being presented with the first activation code 311.

**Action 307.** Optionally, the off-board control station 100 may receive, via the wireless communication interface, information from the on-board control unit 114 indicating that the vehicle 110 has been activated for operation. This means, for example, that if the manual input, i.e. second activation code 312, from the operator working at a remote control interface 5 of an off-board control station 100 is determined by the on-board control unit 114 to correspond to the first activation code 311 in the on-board control unit 114, then the on-board control unit 114 may provide information back to the off-board control station 100 confirming the activation of the vehicle 110.

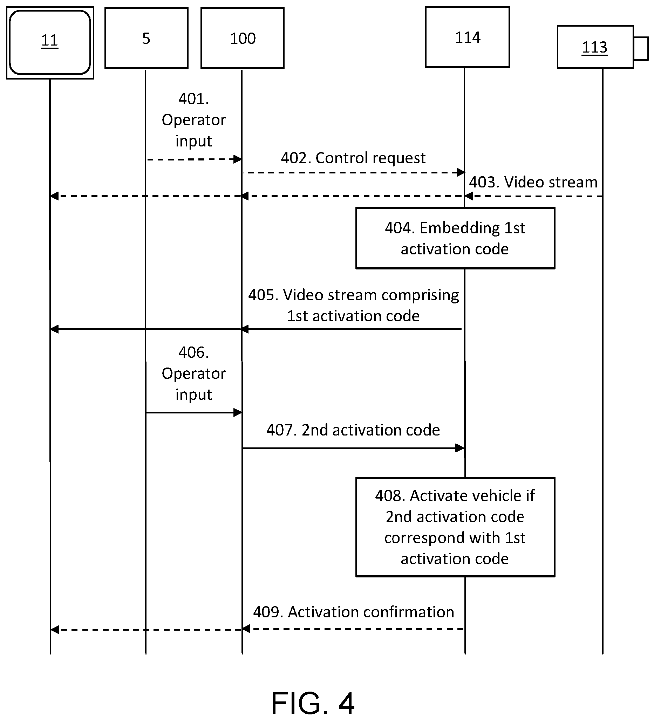

**Fig. 4** shows a signalling diagram illustrating embodiments of the on-board control unit 114 and the off-board control station 100 in a system 10.

**Action 401.** Optionally, an operator working at a remote control interface 5 connected to the off-board control station 100 may request remote control of the vehicle 110.

**Action 402.** In response to the request in Action 401, the off-board control station 100 may request remote control of the vehicle 110 from the on-board control unit 114.

**Action 403.** The on-board control unit 114 may continuously transmit camera images, i.e. stream images or video received from the one or more on-board cameras 112, 113, to the off-board control station 100 which may display the camera images to the operator via the display 11 of the remote control interface 5 connected to the off-board control station 100.

**Action 404.** Prior to activating the vehicle 110, the on-board control unit 114 may embed a visual representation of the first activation code 311 of the vehicle 110 in the received camera images from the one or more on-board cameras 112, 113.

**Action 405.** After the embedding in Action 404, the on-board control unit 114 may transmit the camera images comprising the embedded visual representation of the first activation code 311 to the off-board control station 100 which may display the camera images to the operator via the display 11 of the remote control interface 5 connected to the off-board control station 100.

**Action 406.** In response to viewing the camera images via the display 11, an operator may via the remote control interface 5 connected to the off-board control station 100 provide manual inputs corresponding to a second activation code 312.

**Action 407.** In response to receiving the manual input, the off-board control station 100 may transmit information indicating the second activation code 312 to the on-board control unit 114.

**Action 408.** Upon receiving the second activation code 312 in Action 407, the on-board control unit 114 may compare the received second activation code 312 with the first activation code 311 of the vehicle 110. If the received second activation code 312 match the first activation code 311, the on-board control unit 114 may activate the vehicle 110 for remote control by the operator working at the remote control interface 5 connected to the off-board control station 100. If the received second activation code 312 does not match the first activation code 311, the on-board control unit 114 will not activate the vehicle 110 for remote control.

**Action 409.** In case the on-board control unit 114 activated the vehicle 110 for remote control in Action 408, the on-board control unit 114 may transmit information indicating the activation of the vehicle 110 to the off-board control station 100. The off-board control station 100 may thus indicate this to the operator, e.g. via the display 11 of the remote control interface 5 connected to the off-board control station 100.

**Fig. 5** illustrates an example of a display 11 presenting camera images from the on-board cameras 112, 113 to an operator working at a remote control interface 5 connected to an off-board control station 100.

In a first stage A, the off-board control station 100 may control the display 11 to present a first graphics 301 allowing the operator to enter manual input indicating which vehicle the operator is requesting to control, such as, the vehicle 110. In response to entering the manual input, the off-board control station 100 may send information to the on-board control unit 114 of the requested vehicle, e.g. the vehicle 110. Optionally, this stage may be skipped and start with stage B below.

In a second stage B, the on-board control unit 114 may, e.g. in response to the information from the off-board control station 100, transmit camera images from the on-board cameras 112, 113 to the off-board control station 100. In this stage B, the on-board control unit 114 may also embed a visual, graphical representation of a first activation code 311 of the vehicle 110 into the camera images being sent to the off-board control station 100. Here, the visual, graphical representation of the first activation code 311 may comprise a colouring indicating that the vehicle 110 has not yet been activated, such as, e.g. red. Upon receiving the camera images, the off-board control station 100 may display the received camera images comprising the visual, graphical representation of the first activation code 311 on the display 11 to the operator.

In a third stage C, the off-board control station 100 may control the display 11 to present a second graphics 302 allowing the operator to enter manual input corresponding to the first activation code 311, i.e. a second activation code 312. In response to entering the manual input, i.e. the second activation code 312, the off-board control station 100 may then send information to the on-board control unit 114 indicating the second activation code 312.

In a fourth stage D, the on-board control unit 114 may in response to the second activation code 312 from the off-board control station 100 activate the vehicle 110 in case the received second activation code 312 correspond to the first activation code 311 in the on-board control unit 114. Here, the on-board control unit 114 may also change the visual, graphical representation of the first activation code 311 to, for example, comprise a different colouring indicating that the vehicle 110 has been activated, such as, e.g. green.

To perform the method actions for enabling a safe operation of the vehicle 110, an on-board control unit 114 of the vehicle 110 may comprise the following arrangement depicted in **Fig. 6.** Fig. 6 shows a schematic block diagram of embodiments of the on-board control unit 114. It should also be noted that, although not shown in Fig. 6, known conventional features of an on-board control unit 114, such as, for example, a connection to a power source, e.g. a battery or an electric grid, may be assumed to be comprised in the on-board control unit 114 but is not shown or described in any further detail in regards to Fig. 6.

The on-board control unit 114 may comprise a **processing circuitry 610** and a **memory 620.** The processing circuitry 610 may be arranged to execute instruction sets stored in the memory 620. The processing circuitry 610 may also comprise **wireless communications interface 611.** According to some embodiments, the wireless communications interface 611 may comprise RF circuitry and baseband processing circuitry capable of transmitting and receiving a radio signal in a wireless communications network, e.g. a telecommunications network. Optionally, the wireless communications interface 611 may also be configured to use WLAN, UWB or Bluetooth wireless communications for the wireless communication. Also, the wireless communications interface 611 may also be arranged to be connected to and use an **antenna 115** for the transmissions. The antenna 115 may be part of the on-board control unit 114 or located on the vehicle 110. Here, the wireless communications interface 611 may further be adapted to receive camera images, i.e. image or video feeds, from one or more on-board cameras 112, 113. This may be performed wirelessly or via one or more wired connections (as shown in Fig. 6). It should also be noted that some or all of the functionality described in the embodiments above as being performed by the on-board control unit 114 may be provided by the processing circuitry 610 executing instructions stored on a computer-readable medium, such as, e.g. the memory 620 shown in Fig. 6. Alternative embodiments of the on-board control unit 114 may comprise additional components, such as, for example, an **embedding module 612** and an activating **module 613,** whereby each module may be configured and responsible for providing its dedicated functionality to support the embodiments described herein.

The on-board control unit 114 or processing circuitry 610 is configured to, or may comprise a wireless communications interface 611 configured to, receive, via a wireless communication interface 611, a second activation code 312 from an off-board control station 100 capable of remotely operating the vehicle 110. The on-board control unit 114 or processing circuitry 610 is also configured to, or may comprise the activating module 612 configured to, activate the vehicle 110 for operation in case the received second activation code 312 correspond to a first activation code 311 comprised in the on-board control unit 114.

In some embodiments, the on-board control unit 114 or processing circuitry 610 may be configured to, or may comprise a wireless communications interface 611 configured to, receive, from the off-board control station 100, information indicating that the vehicle 110 is to be activated for operation. In this case, the on-board control unit 114 or processing circuitry 610 may be configured to, or may comprise a wireless communications interface 611 configured to, transmit the first activation code 311 to the off-board control station 100 in response to the received information. Here, according to some embodiments, the on-board control unit 114 or processing circuitry 610 may be configured to, or may comprise the embedding module 612 configured to, embed a visual representation of the first activation code 311 in camera images obtained from one or more on-board cameras 112, 113. In this case, the on-board control unit 114 or processing circuitry 610 may be configured to, or may comprise a wireless communications interface 611 configured to, transmit the camera images comprising the visual representation of the first activation code 311 to the off-board control station 100.

In some embodiments, the on-board control unit 114 or processing circuitry 610 may be configured to, or may comprise a wireless communications interface 611 configured to, transmit, to the off-board control station 100, information indicating that the vehicle 110 has been activated for operation. Further, in some embodiments, the on-board control unit 114 or processing circuitry 610 may also configured to, or may comprise the activating module 612 configured to, in case the vehicle 110 is an autonomous vehicle, activate the autonomous vehicle to begin performing one or more autonomous operations. Optionally, in some embodiments, the on-board control unit 114 or processing circuitry 610 may also configured to, or may comprise the activating module 612 configured to, in case the vehicle 110 is a remote-controlled vehicle, activate the remote-controlled vehicle to be remotely operated from the off-board remote control station.

Furthermore, the embodiments for enabling a safe operation of the vehicle 110 described above may be at least partly implemented through one or more processors, such as the processing circuitry 610 in the on-board control unit 114 depicted in Fig. 6, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 610 in the on-board control unit 114. The computer program code may e.g. be provided as pure program code in the on-board control unit 114 or on a server and downloaded to the on-board control unit 114. Thus, it should be noted that the on-board control unit 114 may in some embodiments be implemented as computer programs stored in a memory, e.g. in the memory 620 in Fig. 6, for execution by processors or processing modules, e.g. the processing circuitry 610 in the on-board control unit 114 of Fig. 6.

Those skilled in the art will also appreciate that the processing circuitry 610 and the memory 620, i.e. computer readable storage unit, described above may refer to a combination of analog and digital circuits, and/or one or more processors configured with software and/or firmware, e.g. stored in a memory, that when executed by the one or more processors such as the processing circuitry 610 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

To perform the method actions for enabling a safe operation of a vehicle 110, an off-board control station 100 may comprise the following arrangement depicted in **Fig. 7.** Fig. 7 shows a schematic block diagram of embodiments of the off-board control station 100. It should also be noted that, although not shown in Fig. 7, known conventional features of an off-board control station 100, such as, for example, a connection to a power source, e.g. a battery or an electric grid, may be assumed to be comprised in the off-board control station 100 but is not shown or described in any further detail in regards to Fig. 7.

The off-board control station 100 may comprise a **processing circuitry 710** and a **memory 720.** The processing circuitry 710 may be arranged to execute instruction sets stored in the memory 720. The processing circuitry 710 may also comprise **wireless communications interface 711.** According to some embodiments, the wireless communications interface 711 may, for example, a communications interface or module connected via a communication link 120 to a communications server 106 of a wireless communications network 105 (as shown in Fig. 1). It should however be noted that other wireless network configurations also may be implemented in the off-board control station 100, wherein the wireless communications interface 711 may also be configured to use WLAN, UWB or Bluetooth wireless communications for the wireless communication. Here, the wireless communications interface 711 may further be adapted to receive camera images, i.e. image or video feeds, from one or more on-board cameras 112, 113 of the vehicle 110. It should also be noted that some or all of the functionality described in the embodiments above as being performed by the off-board control station 100 may be provided by the processing circuitry 710 executing instructions stored on a computer-readable medium, such as, e.g. the memory 720 shown in Fig. 7. Alternative embodiments of the off-board control station 100 may comprise additional components, such as, for example, an **indication module 712,** whereby the indication module 712 is configured and responsible for providing its dedicated functionality to support the embodiments described herein.

The off-board control station 100 or processing circuitry 710 is configured to, or may comprise the wireless communications interface 711 configured to, receive, via a wireless communication interface 711, a first activation code 311 from an on-board control unit 114. The off-board control station 100 or processing circuitry 710 is also configured to, or may comprise the indication module 712 configured to, indicate the received first activation code 311 to an operator of the off-board control station 100. Further, the off-board control station 100 or processing circuitry 710 is configured to, or may comprise the wireless communications interface 711 configured to, receive manual input indicating a second activation code 312 from the operator of the off-board control station 100. Additionally, the off-board control station 100 or processing circuitry 710 is configured to, or may comprise the wireless communications interface 711 configured to, transmit, via the wireless communication interface 711, the received second activation code 312 to the on-board control unit 114 of the vehicle 110.

In some embodiments, the off-board control station 100 or processing circuitry 710 may be configured to, or may comprise the wireless communications interface 711 configured to, receive, from the operator of the off-board control station 100, manual input indicating that the vehicle 110 is to be activated for operation. In this case, according to some embodiments, the off-board control station 100 or processing circuitry 710 may be configured to, or may comprise the wireless communications interface 711 configured to, transmit, to the on-board control unit 114, information indicating that the vehicle 110 is to be activated for operation. Further, in some embodiments, the off-board control station 100 or processing circuitry 710 may be configured to, or may comprise thewireless communications interface 711 configured to, receive, via the wireless communication interface 711, information from the on-board control unit 114 indicating that the vehicle 110 has been activated for operation.

Also, in some embodiments, the off-board control station 100 or processing circuitry 710 may be configured to, or may comprise the wireless communications interface 711 configured to, receive the first activation code 311 by receiving camera images originating from one or more on-board cameras 112, 113 of the vehicle 110 comprising an embedded visual representation of the first activation code 311. In this case, according to some embodiments, the off-board control station 100 or processing circuitry 710 may be configured to, or may comprise the indication module 712 configured to, indicate the first activation code 311 by displaying the camera images comprising an embedded visual representation of the first activation code 311 to the operator of the off-board control station 100. In some embodiments, this may be performed using a display 11 connected to the off-board control station 100.

Furthermore, the embodiments for enabling a safe operation of a vehicle 110 described above may be at least partly implemented through one or more processors, such as the processing circuitry 710 in the off-board control station 100 depicted in Fig. 7, together with computer program code for performing the functions and actions of the embodiments herein. The program code mentioned above may also be provided as a computer program product, for instance in the form of a data carrier carrying computer program code or code means for performing the embodiments herein when being loaded into the processing circuitry 710 in the off-board control station 100. The computer program code may e.g. be provided as pure program code in the off-board control station 100 or on a server and downloaded to the off-board control station 100. Thus, it should be noted that the off-board control station 100 may in some embodiments be implemented as computer programs stored in a memory, e.g. in the memory 720 in Fig. 7, for execution by processors or processing modules, e.g. the processing circuitry 710 in the off-board control station 100 of Fig. 7.

Those skilled in the art will also appreciate that the processing circuitry 710 and the memory 720, i.e. computer readable storage unit, described above may refer to a combination of analog and digital circuits, and/or one or more processors configured with software and/or firmware, e.g. stored in a memory, that when executed by the one or more processors such as the processing circuitry 710 perform as described above. One or more of these processors, as well as the other digital hardware, may be included in a single application-specific integrated circuit (ASIC), or several processors and various digital hardware may be distributed among several separate components, whether individually packaged or assembled into a system-on-a-chip (SoC).

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems and computer program products. It should be appreciated that the example embodiments presented herein may be practiced in any combination with each other.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

It should also be noted that the various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures and program modules represent examples of program code for executing steps of the methods disclosed herein. The particular sequence of such executable instructions or associated data structures represents examples of corresponding acts for implementing the functions described in such steps or processes.

The embodiments herein are not limited to the above described preferred embodiments. Various alternatives, modifications and equivalents may be used. Therefore, the above embodiments should not be construed as limiting.

## Claims

1. A method performed by an on-board control unit (114) of a vehicle (110) for enabling a safe operation of the vehicle (110), wherein the method comprise:
*receiving* (201), from an off-board control station (100), information indicating that the vehicle (110) is to be activated for operation;
*transmitting* (202) a first activation code (311) to the off-board control station (100) in response to the received information by embedding a visual representation of the first activation code (311) in camera images obtained from one or more on-board cameras (112, 113) and transmitting the camera images comprising the visual representation of the first activation code (311) to the off-board control station (100);
*receiving* (203), via a wireless communication interface (611), a second activation code (312) from an off-board control station (100) capable of remotely operating the vehicle (110); and
*activating* (204) the vehicle (110) for operation in case the received second activation code correspond to the first activation code (311) comprised in the on-board control unit (114).

2. The method according to claim 1, further comprising:
*transmitting* (205), to the off-board control station (100), information indicating that the vehicle (110) has been activated for operation.

3. The method according to claim 1 or 2, further comprising, in case the vehicle (110) is an autonomous vehicle, activating the autonomous vehicle to begin performing one or more autonomous operations.

4. The method according to any of claims 1-3, further comprising, in case the vehicle (110) is a remote-controlled vehicle, activating the remote-controlled vehicle to be remotely operated from the off-board control station.

5. An on-board control unit (114) of a vehicle (110) for enabling a safe operation of the vehicle (110), wherein the on-board control unit (114) is configured to
receive, from the off-board control station (100), information indicating that the vehicle (110) is to be activated for operation,
transmit the first activation code (311) to the off-board control station (100) in response to the received information by embedding a visual representation of the first activation code (311) in camera images obtained from one or more on-board cameras (112, 113) and transmitting the camera images comprising the visual representation of the first activation code (311) to the off-board control station (100),
receive, via a wireless communication interface (611), a second activation code (312) from an off-board control station (100) capable of remotely operating the vehicle (110), and
activate the vehicle (110) for operation in case the received second activation code correspond to the first activation code (311) comprised in the on-board control unit (114).

6. The control unit (110) according to claim 5, further configured to transmit, to the off-board control station (100), information indicating that the vehicle (110) has been activated for operation.

7. The control unit (110) according to claim 5 or 6, further configured to, in case the vehicle (110) is an autonomous vehicle, activate the autonomous vehicle to begin performing one or more autonomous operations.

8. The control unit (110) according to any of claims 5-7, further configured to, in case the vehicle (110) is a remote-controlled vehicle, activate the remote-controlled vehicle to be remotely operated from the off-board remote control station.

9. A method performed by an off-board control station (100) for enabling a safe operation of a vehicle (110), wherein the method comprise:
*receiving* (303), via a wireless communication interface (711), a first activation code (311) from an on-board control unit (114) by receiving camera images originating from one or more on-board cameras (112, 113) of the vehicle (110) comprising an embedded visual representation of the first activation code (311);
*indicating* (304) the received first activation code (311) to an operator of the off-board control station (100) by displaying the camera images comprising the embedded visual representation of the first activation code (311) to the operator of the off-board control station (100);
*receiving* (305) manual input indicating a second activation code (312) from the operator of the off-board control station (100); and
*transmitting* (306), via the wireless communication interface (711), the received second activation code (312) to the on-board control unit (114) of the vehicle (110).

10. The method according to claim 9, further comprising:
*receiving* (301), from the operator of the off-board control station (100), manual input indicating that the vehicle (110) is to be activated for operation; and
*transmitting* (302), to the on-board control unit (114), information indicating that the vehicle (110) is to be activated for operation.

11. The method according to claim 9 or 10, further comprising:
*receiving* (307), via the wireless communication interface (611), information from the on-board control unit (114) indicating that the vehicle (110) has been activated for operation.

12. An off-board control station (100) for enabling a safe operation of a vehicle (110),
wherein the off-board control station (100) is configured to:
receive, via a wireless communication interface (611), a first activation code (311) from an on-board control unit (114) by receiving camera images originating from one or more on-board cameras (112, 113) of the vehicle (110) comprising an embedded visual representation of the first activation code (311), indicate the received first activation code (311) to an operator of the off-board control station by displaying the camera images comprising an embedded visual representation of the first activation code (311) to the operator of the off-board control station (100), receive manual input indicating a second activation code (312) from the operator of the off-board control station, and transmit, via the wireless communication interface (711), the received second activation code (312) to the on-board control unit (114) of the vehicle (110).

13. The off-board control station (100) according to claim 12, further configured to receive, from the operator of the off-board control station (100), manual input indicating that the vehicle (110) is to be activated for operation, and transmit, to the on-board control unit (114), information indicating that the vehicle (110) is to be activated for operation.

14. The off-board control station (100) according to claim 12 or 13, further configured to receive, via the wireless communication interface (711), information from the on-board control unit (114) indicating that the vehicle (110) has been activated for operation.

15. A computer program comprising program code means for performing the steps of any of claims 1-4 or 9-11 when said program is run on a computer or on processing circuitry (610; 710) of an on-board control unit (114) or off-board control station (100), respectively.

16. A computer program carrier carrying a computer program according to claim 15, wherein the computer program carrier is one of an electronic signal, optical signal, radio signal or computer-readable storage medium.

17. An autonomous or remote-controlled vehicle (100) comprising an on-board control unit (114) according to any of claims 5-8.

## Patentansprüche

1. Verfahren, das durch eine bordeigene Steuereinheit (114) eines Fahrzeugs (110) zum Ermöglichen eines sicheren Betriebs des Fahrzeugs (110) durchgeführt wird, wobei das Verfahren Folgendes umfasst:
Empfangen (201), von einer bordexternen Steuerstation (100), von Informationen, die anzeigen, dass das Fahrzeug (110) für den Betrieb zu aktivieren ist;
Übertragen (202) eines ersten Aktivierungscodes (311) an die bordexterne Steuerstation (100) als Reaktion auf die empfangenen Informationen durch Einbetten einer visuellen Darstellung des ersten Aktivierungscodes (311) in Kamerabildern, die von einer oder mehreren bordeigenen Kameras (112, 113) erlangt wurden, und Übertragen der Kamerabilder, welche die visuelle Darstellung des ersten Aktivierungscodes (311) umfassen, an die bordexterne Steuerstation (100);
Empfangen (203), über eine drahtlose Kommunikationsschnittstelle (611), eines zweiten Aktivierungscodes (312) von einer bordexternen Steuerstation (100), die in der Lage ist, das Fahrzeug (110) aus der Ferne zu bedienen; und
Aktivieren (204) des Fahrzeugs (110) für den Betrieb, falls der empfangene zweite Aktivierungscode dem ersten Aktivierungscode (311), der in der bordeigenen Steuereinheit (114) umfasst ist, entspricht.

2. Verfahren nach Anspruch 1, ferner umfassend:
Übertragen (205), an die bordexterne Steuerstation (100), von Informationen, die anzeigen, dass das Fahrzeug (110) für den Betrieb aktiviert wurde.

3. Verfahren nach einem der Ansprüche 1 oder 2, ferner umfassend, falls das Fahrzeug (110) ein autonomes Fahrzeug ist, Aktivieren des autonomen Fahrzeugs, um mit einem Durchführen einer oder mehrerer autonomer Operationen zu beginnen.

4. Verfahren nach einem der Ansprüche 1-3, ferner umfassend, falls das Fahrzeug (110) ein ferngesteuertes Fahrzeug ist, Aktivieren des ferngesteuerten Fahrzeugs, um von der bordexternen Steuerstation aus der Ferne betrieben zu werden.

5. Bordeigene Steuereinheit (114) eines Fahrzeugs (110) zum Ermöglichen eines sicheren Betriebs des Fahrzeugs (110), wobei die bordeigene Steuereinheit (114) zu Folgendem konfiguriert ist:
Empfangen, von der bordexternen Steuerstation (100), von Informationen, die anzeigen, dass das Fahrzeug (110) für den Betrieb zu aktivieren ist,
Übertragen des ersten Aktivierungscodes (311) an die bordexterne Steuerstation (100) als Reaktion auf die empfangenen Informationen durch Einbetten einer visuellen Darstellung des ersten Aktivierungscodes (311) in Kamerabildern, die von einer oder mehreren bordeigenen Kameras (112, 113) erlangt wurden, und Übertragen der Kamerabilder, welche die visuelle Darstellung des ersten Aktivierungscodes (311) umfassen, an die bordexterne Steuerstation (100),
Empfangen, über eine drahtlose Kommunikationsschnittstelle (611), eines zweiten Aktivierungscodes (312) von einer bordexternen Steuerstation (100), die in der Lage ist, das Fahrzeug (110) aus der Ferne zu bedienen, und
Aktivieren des Fahrzeugs (110) für den Betrieb, falls der empfangene zweite Aktivierungscode dem ersten Aktivierungscode (311), der in der bordeigenen Steuereinheit (114) umfasst ist, entspricht.

6. Steuereinheit (110) nach Anspruch 5, die ferner dazu konfiguriert ist, Informationen, die anzeigen, dass das Fahrzeug (110) für den Betrieb aktiviert wurde, an die bordexterne Steuerstation (100) zu übertragen.

7. Steuereinheit (110) nach einem der Ansprüche 5 oder 6, die ferner dazu konfiguriert ist, falls das Fahrzeug (110) ein autonomes Fahrzeug ist, das autonome Fahrzeug zu aktivieren, um mit dem Durchführen einer oder mehrerer autonomer Operationen zu beginnen.

8. Steuereinheit (110) nach einem der Ansprüche 5-7, die ferner dazu konfiguriert ist, falls das Fahrzeug (110) ein ferngesteuertes Fahrzeug ist, das ferngesteuerte Fahrzeug zu aktivieren, um von der bordexternen entfernten Steuerstation aus der Ferne betrieben zu werden.

9. Verfahren, das von einer bordexternen Steuerstation (100) zum Ermöglichen eines sicheren Betriebs eines Fahrzeugs (110) durchgeführt wird, wobei das Verfahren Folgendes umfasst:
Empfangen (303), über eine drahtlose Kommunikationsschnittstelle (711), eines ersten Aktivierungscodes (311) von einer bordeigenen Steuereinheit (114) durch Empfangen von Kamerabildern, die von einer oder mehreren bordeigenen Kameras (112, 113) des Fahrzeugs (110) stammen und die eine eingebettete visuelle Darstellung des ersten Aktivierungscodes (311) umfassen;
Anzeigen (304) des empfangenen ersten Aktivierungscodes (311) an einen Betreiber der bordexternen Steuerstation (100) durch Anzeigen der Kamerabilder, welche die eingebettete visuelle Darstellung des ersten Aktivierungscodes (311) umfassen, an den Betreiber der bordexternen Steuerstation (100);
Empfangen (305) einer manuellen Eingabe, die einen zweiten Aktivierungscode (312) anzeigt, von dem Betreiber der bordexternen Steuerstation (100); und
Übertragen (306), über die drahtlose Kommunikationsschnittstelle (711), des empfangenen zweiten Aktivierungscodes (312) an die bordeigene Steuereinheit (114) des Fahrzeugs (110).

10. Verfahren nach Anspruch 9, ferner umfassend:
Empfangen (301), von dem Betreiber der bordexternen Steuerstation (100), einer manuellen Eingabe, die anzeigt, dass das Fahrzeug (110) für den Betrieb zu aktivieren ist; und
Übertragen (302), an die bordeigene Steuereinheit (114), von Informationen, die anzeigen, dass das Fahrzeug (110) für den Betrieb zu aktivieren ist.

11. Verfahren nach Anspruch 9 oder 10, ferner umfassend:
Empfangen (307), über die drahtlose Kommunikationsschnittstelle (611), von Informationen von der bordeigenen Steuereinheit (114), die anzeigen, dass das Fahrzeug (110) für den Betrieb aktiviert wurde.

12. Bordexterne Steuerstation (100) zum Ermöglichen eines sicheren Betriebs eines Fahrzeugs (110), wobei die bordexterne Steuerstation (100) zu Folgendem konfiguriert ist:
Empfangen, über eine drahtlose Kommunikationsschnittstelle (611), eines ersten Aktivierungscodes (311) von einer bordeigenen Steuereinheit (114) durch Empfangen von Kamerabildern, die von einer oder mehreren bordeigenen Kameras (112, 113) des Fahrzeugs (110) stammen und eine eingebettete visuelle Darstellung des ersten Aktivierungscodes (311) umfassen, Anzeigen des empfangenen ersten Aktivierungscodes (311) an einen Betreiber der bordexternen Steuerstation durch Anzeigen der Kamerabilder, welche eine eingebettete visuelle Darstellung des ersten Aktivierungscodes (311) umfassen, an den Betreiber der bordexternen Steuerstation (100), Empfangen einer manuellen Eingabe, die einen zweiten Aktivierungscode (312) anzeigt, von dem Betreiber der bordexternen Steuerstation und Übertragen, über die drahtlose Kommunikationsschnittstelle (711), des empfangenen zweiten Aktivierungscodes (312) an die bordeigene Steuereinheit (114) des Fahrzeugs (110).

13. Bordexterne Steuerstation (100) nach Anspruch 12, die ferner dazu konfiguriert ist, von dem Betreiber der bordexternen Steuerstation (100) eine manuelle Eingabe zu empfangen, die anzeigt, dass das Fahrzeug (110) für den Betrieb zu aktivieren ist, und Informationen, die anzeigen, dass das Fahrzeug (110) für den Betrieb zu aktivieren ist, an die bordeigene Steuereinheit (114) zu übertragen.

14. Bordexterne Steuerstation (100) nach Anspruch 12 oder 13, die ferner dazu konfiguriert ist, über die drahtlose Kommunikationsschnittstelle (711) Informationen von der bordeigenen Steuereinheit (114) zu empfangen, die anzeigen, dass das Fahrzeug (110) für den Betrieb aktiviert wurde.

15. Computerprogramm, umfassend Programmcodemittel zum Durchführen der Schritte nach einem der Ansprüche 1-4 oder 9-11, wenn das Programm auf einem Computer oder auf einer Verarbeitungsschaltung (610; 710) einer bordeigenen Steuereinheit (114) bzw. einer bordexternen Steuerstation (100) ausgeführt wird.

16. Computerprogrammträger, der ein Computerprogramm nach Anspruch 15 trägt, wobei der Computerprogrammträger eines von einem elektronischen Signal, optischen Signal, Funksignal oder computerlesbaren Speichermedium ist.

17. Autonomes oder ferngesteuertes Fahrzeug (100), umfassend eine bordeigene Steuereinheit (114) nach einem der Ansprüche 5-8.

## Revendications

1. Procédé mis en œuvre par une unité de commande embarquée (114) d'un véhicule (110) pour permettre un fonctionnement sûr du véhicule (110), dans lequel le procédé comprend :
*la réception* (201), à partir d'une station de commande hors-bord (100), d'informations indiquant que le véhicule (110) doit être activé pour fonctionner ;
*la transmission* (202) d'un premier code d'activation (311) à la station de commande hors-bord (100) en réponse aux informations reçues en intégrant une représentation visuelle du premier code d'activation (311) dans des images de caméra obtenues à partir d'une ou plusieurs caméras embarquées (112, 113) et en transmettant les images de caméra comprenant la représentation visuelle du premier code d'activation (311) à la station de commande hors-bord (100) ;
*la réception* (203), via une interface de communication sans fil (611), d'un deuxième code d'activation (312) à partir d'une station de commande hors-bord (100) capable de faire fonctionner à distance le véhicule (110) ; et
*l'activation* (204) du véhicule (110) pour le fonctionnement dans le cas où le deuxième code d'activation reçu correspond au premier code d'activation (311) compris dans l'unité de commande embarquée (114).

2. Procédé selon la revendication 1, comprenant en outre :
*la transmission* (205), à la station de commande hors-bord (100), d'informations indiquant que le véhicule (110) a été activé pour fonctionner.

3. Procédé selon la revendication 1 ou 2, comprenant en outre, dans le cas où le véhicule (110) est un véhicule autonome, l'activation du véhicule autonome pour commencer à effectuer une ou plusieurs opérations autonomes.

4. Procédé selon l'une quelconque des revendications 1 à 3, comprenant en outre, dans le cas où le véhicule (110) est un véhicule télécommandé, l'activation du véhicule télécommandé pour qu'il soit commandé à distance à partir de la station de commande hors-bord.

5. Unité de commande embarquée (114) d'un véhicule (110) permettant un fonctionnement sûr du véhicule (110), l'unité de commande embarquée (114) étant configurée pour
recevoir, à partir de la station de commande hors-bord (100), des informations indiquant que le véhicule (110) doit être activé pour fonctionner,
transmettre le premier code d'activation (311) à la station de commande hors-bord (100) en réponse aux informations reçues en intégrant une représentation visuelle du premier code d'activation (311) dans des images de caméra obtenues à partir d'une ou plusieurs caméras embarquées (112, 113) et en transmettant les images de caméra comprenant la représentation visuelle du premier code d'activation (311) à la station de commande hors-bord (100),
recevoir, via une interface de communication sans fil (611), un deuxième code d'activation (312) à partir d'une station de commande hors-bord (100) capable de faire fonctionner à distance le véhicule (110), et
activer le véhicule (110) pour le fonctionnement dans le cas où le deuxième code d'activation reçu correspond au premier code d'activation (311) compris dans l'unité de commande embarquée (114).

6. Unité de commande (110) selon la revendication 5, configurée en outre pour transmettre, à la station de commande hors-bord (100), des informations indiquant que le véhicule (110) a été activé pour fonctionner.

7. Unité de commande (110) selon la revendication 5 ou 6, configurée en outre pour, dans le cas où le véhicule (110) est un véhicule autonome, activer le véhicule autonome pour commencer à effectuer une ou plusieurs opérations autonomes.

8. Unité de commande (110) selon l'une quelconque des revendications 5 à 7, configurée en outre pour, dans le cas où le véhicule (110) est un véhicule télécommandé, activer le véhicule télécommandé pour qu'il soit commandé à distance à partir de la station de commande à distance hors-bord.

9. Procédé mis en œuvre par une station de commande hors-bord (100) pour permettre le fonctionnement sûr d'un véhicule (110), dans lequel le procédé comprend :
*la réception* (303), via une interface de communication sans fil (711), d'un premier code d'activation (311) à partir d'une unité de commande embarquée (114) en recevant des images de caméra à partir d'une ou plusieurs caméras embarquées (112, 113) du véhicule (110) comprenant une représentation visuelle intégrée du premier code d'activation (311) ;
*l'indication* (304) du premier code d'activation reçu (311) à un opérateur de la station de commande hors-bord (100) en affichant les images de caméra comprenant la représentation visuelle intégrée du premier code d'activation (311) à l'opérateur de la station de commande hors-bord (100) ;
*la réception* (305) d'une entrée manuelle indiquant un deuxième code d'activation (312) à partir de l'opérateur de la station de commande hors-bord (100) ; et
la transmission (306), via l'interface de communication sans fil (711), du deuxième code d'activation reçu (312) à l'unité de commande embarquée (114) du véhicule (110).

10. Procédé selon la revendication 9, comprenant en outre :
*la réception* (301), à partir de l'opérateur de la station de commande hors-bord (100), d'une entrée manuelle indiquant que le véhicule (110) doit être activé pour fonctionner ; et
*la transmission* (302), à l'unité de commande embarquée (114), d'informations indiquant que le véhicule (110) doit être activé pour fonctionner.

11. Procédé selon la revendication 9 ou 10, comprenant en outre :
*la réception* (307), via l'interface de communication sans fil (611), d'informations à partir de l'unité de commande embarquée (114) indiquant que le véhicule (110) a été activé pour fonctionner.

12. Station de commande hors-bord (100) permettant le fonctionnement sûr d'un véhicule (110), dans laquelle ladite station de commande hors-bord (100) est configurée pour :
recevoir, via une interface de communication sans fil (611), un premier code d'activation (311) à partir d'une unité de commande embarquée (114) en recevant des images de caméra à partir d'une ou plusieurs caméras embarquées (112, 113) du véhicule (110) comprenant une représentation visuelle intégrée du premier code d'activation (311), indiquer le premier code d'activation reçu (311) à un opérateur de la station de commande hors-bord en affichant les images de caméra comprenant une représentation visuelle intégrée du premier code d'activation (311) à l'opérateur de la station de commande hors-bord (100), recevoir une entrée manuelle indiquant un deuxième code d'activation (312) à partir de l'opérateur de la station de commande hors-bord, et transmettre, via l'interface de communication sans fil (711), le deuxième code d'activation reçu (312) à l'unité de commande embarquée (114) du véhicule (110).

13. Station de commande hors-bord (100) selon la revendication 12, configurée en outre pour recevoir, à partir de l'opérateur de la station de commande hors-bord (100), une entrée manuelle indiquant que le véhicule (110) doit être activé pour fonctionner, et transmettre, à l'unité de commande embarquée (114), des informations indiquant que le véhicule (110) doit être activé pour fonctionner.

14. Station de commande hors-bord (100) selon la revendication 12 ou 13, configurée en outre pour recevoir, via l'interface de communication sans fil (711), des informations à partir de l'unité de commande embarquée (114) indiquant que le véhicule (110) a été activé pour fonctionner.

15. Programme informatique comprenant des moyens de code de programme pour réaliser les étapes selon l'une quelconque des revendications 1 à 4 ou 9 à 11 lorsque ledit programme est exécuté sur un ordinateur ou sur un circuit de traitement (610 ; 710) d'une unité de commande embarquée (114) ou d'une station de commande hors-bord (100), respectivement.

16. Support de programme informatique portant un programme informatique selon la revendication 15, dans lequel le support de programme informatique est l'un parmi un signal électronique, un signal optique, un signal radio ou un support de stockage lisible par ordinateur.

17. Véhicule autonome ou télécommandé (100) comprenant une unité de commande embarquée (114) selon l'une quelconque des revendications 5 à 8.
